# EUROPÄISCHE PATENTSCHRIFT

(11) **EP 1 683 980 B1**
(45) Veröffentlichungstag und Bekanntmachung des Hinweises auf die Patenterteilung: **14.10.2009**
(21) Anmeldenummer: 05024492.0
(22) Anmeldetag: 10.11.2005
(51) Int. Cl.: F16D 3/38

(54) **Flanschmitnehmer für ein Kardangelenk und Gelenkwelle**
Driving flange for a cardan joint and articulated shaft
Elément entraineur à bride pour joint de cardan et arbre articulé

(30) Priorität: 25.01.2005 DE 102005003323
(43) Veröffentlichungstag der Anmeldung: 26.07.2006
(73) Patentinhaber: Voith Turbo GmbH & Co. KG, 89522 Heidenheim (DE)
(72) Erfinder: Grawenhof, Peter, 89547 Dettingen (DE); Theilacker, Klaus, 89522 Heidenheim (DE)
(74) Vertreter: Dr. Weitzel & Partner

(56) Entgegenhaltungen:
- EP-A- 1 178 232
- WO-A-02/066847

## Beschreibung

Die Erfindung betrifft einen Flanschmitnehmer für ein Kardangelenk einer Gelenkwelle, umfassend zwei Gelenkgabelhälften, im einzelnen mit den Merkmalen aus dem Oberbegriff des Anspruches 1; ferner eine Gelenkwelle mit einem Flanschmitnehmer.

Ausführungsformen von Flanschmitnehmern in geteilter Form sind in einer Vielzahl von Ausführungen bekannt. Stellvertretend wird auf die nachfolgend genannten Druckschriften verwiesen:
1. EP 02 06 026 A1
2. DE 43 13 141 C2
3. EP 1 178 232

Geteilt ausgeführte Gelenkgabeln ermöglichen die Gestaltung einteiliger und formstabiler Lageraugen, die wie bei einer ungeteilten Gelenkgabel Bestandteil des angrenzenden Gabelarmes bleiben, über den die Kraftübertragung zum Lagerauge stattfindet. Auf diese Weise erfolgt keine Unterbrechung des Kraftflusses an den spezifisch höchst beanspruchten Stellen der Gelenkgabel. Die in der Symmetrieebene zwischen den Lageraugen und der Gelenkgabel angeordnete Trennstelle liegt im Bereich niedriger Beanspruchung. Diese Anordnungen bieten den Vorteil einer guten Einbettung der Lagerung im Lagerauge und einer einfachen Montierbarkeit sowie einer Erhöhung der Lagertragfähigkeit. Gleichzeitig bilden geteilt ausgeführte Gelenkgabeln wesentliche Vorteile bei der Herstellung und der Bearbeitung der Lagerung. Bei der in der EP 02 06 026 A1 beschriebenen Ausführung weisen die Gelenkgabelhälften jeweils einen Flansch auf, der an seiner, von der Zapfenkreuzachse weggerichteten Seite Formschlusselemente aufweist, so dass mit der angetriebenen bzw. der anzutreibenden Welle eine formschlüssige Verbindung eingegangen wird. Zusätzlich sind lösbare Verbindungen zwischen dem Flansch und der jeweiligen Welle vorgesehen, beispielsweise mittels Dehnschrauben. Die Trennflächen der Gelenkgabelhälften sind im wesentlichen parallel zueinander angeordnet und weisen im mittleren Bereich einander gegenüberstehende Keilnuten auf. In diesen Keilnuten sind Keile viereckiger Form eingelassen. Diese dienen vor allem der Verhinderung der Verschiebung der einzelnen Gelenkgabelhälften gegeneinander parallel zur Zapfenachse des jeweils in der Gelenkgabel gelagerten Zapfens. Eine Vermeidung der Relativbewegung der Gelenkgabelhälften senkrecht zur Zapfenachse ist mit dieser Lösung nicht realisierbar, auch können die Gelenkgabelhälften nicht gegeneinander vorgespannt werden. Die Folge davon ist ein vor allem im Reversierbetrieb auftretendes Abheben einzelner Bereiche der Gelenkgabelhälften unter dem Einfluss der Umfangskraft. Das Abheben bewirkt auch eine Relativbewegung der Formschlusselemente gegen die Aussparungen an der anschließenden Welle, was wiederum zum Entstehen von Hohlräumen führt, in denen sich Feuchtigkeit und Kriechwasser ansammeln kann. Die Folge sind Korrosionserscheinungen, die durch die Mikrobewegungen der Gelenkgabelhälften noch forciert werden.

Zur Lösung dieser Problematik schlägt die Lösung gemäß der DE 43 13 141 C2 eine Ausführung mit Hirth-Stirn-Verzahnung an der Flanschunterseite sowie einer Verzahnung im Bereich der Trennflächen zur Realisierung einer formschlüssigen Verbindung zwischen beiden Gelenkgabelhälften vor. Die Verzahnung, welche vorzugsweise als gerade Stirnverzahnung mit schrägen Flanken ausgeführt ist, ist derart gestaltet, dass bei Verlängerung der Flankenlinie der Verzahnung oder bei gewählter Bogenverzahnung der Sekante durch beide Endpunkte der Flankenlinie einen Winkel von > 0° bis < 180° mit einer Ebene, die von der Gelenkgabelachse und der Zapfenachse aufgespannt wird, bildet. Die Gelenkgabelachse liegt in der Regel in der Symmetrieebene zwischen den beiden Gelenkgabelhälften und steht senkrecht zur Zapfenachse des in dieser Gelenkgabel gelagerten Zapfens. Unter Gelenkgabelachse wird dabei die Rotationsachse verstanden, welche mit der Rotationsachse einer Gelenkwelle zusammenfällt. Durch die Vorspannung der Flanken wird eine Relativbewegung zwischen den Gelenkgabelhälften senkrecht zur Zapfenachse nahezu ausgeschlossen. Allerdings kommt es bei dieser Ausführung aufgrund der getrennten Anordnung der Verzahnungen zu örtlich hohen Belastungen an denjenigen Zähnen, wo die Lasteinleitung stattfindet.

Der Erfindung liegt daher die Aufgabe zugrunde, einen Flanschmitnehmer der eingangs genannten Art derart weiterzuentwickeln, dass Relativbewegungen der Gelenkgabelhälften parallel und senkrecht zur Gelenkgabelachse nahezu ausgeschlossen werden und gleichzeitig Bereiche mit örtlich hoher Belastung in der Trennfuge vermieden werden. Der Flanschmitnehmer soll des weiteren eine günstige Gestaltung zur Aufnahme der Lagerung und zur Realisierung möglichst hoher Lagerkräfte aufweisen sowie durch eine kostengünstige Fertigung unter effektiver Ausnutzung der vorhandenen Kapazitäten und leichte Montierbarkeit charakterisiert sein.

Die erfindungsgemäße Lösung ist durch die Merkmale des Anspruchs 1 charakterisiert. Vorteilhafte Ausgestaltungen sind in den Unteransprüchen beschrieben.

Der Flanschmitnehmer für ein Kardangelenk, insbesondere für den Einsatz von Gelenkwellen, ist durch zwei Gelenkgabelhälften, eine erste Gelenkgabelhälfte und eine zweite Gelenkgabelhälfte, charakterisiert. Jede dieser Gelenkgabelhälften umfasst einen Fußteil und einen Lagerteil. Die Gelenkgabelhälften sind dabei im Bereich ihres Fußteils formschlüssig miteinander unter Bildung eines Flanschteiles aus den einzelnen Fußteilen verbindbar. Die Fußteile der Gelenkgabelhälften weisen an ihre zum Fußteil der jeweils anderen Gelenkgabelhälfte weisenden Koppelfläche eine zueinander komplementäre Verzahnung auf. Erfindungsgemäß ist die Verzahnung derart ausgeführt, dass die Flankenlinie des einzelnen Verzahnungselementes sich ausgehend von einer theoretischen, an der Koppelfläche verlaufenden geneigt zu einer Ebene, die von der Zapfenachse des in der Gelenkgabel gelagerten Zapfens und der Gelenkachse gebildet wird, ausgerichteten Gerade in einem Winkel zwischen 20° und 170°, vorzugsweise im Bereich von 90°, d. h. zwischen 70° und 110°, zu dieser erstreckt oder aber ausgehend gemäß einem zweiten Lösungsansatz von einem theoretischen an der Koppelfläche bildbaren Kreisbogen von dessen Außenumfang in Richtung der Außenkontur des Fußteiles entgegen der Stirnseite des einzelnen Fußteiles erstreckt, wobei die Verlängerung mindestens einer Flankenlinie der Verzahnung an der Koppelfläche oder bei einer Bogenverzahnung die Verlängerung der Sekante durch die Endpunkte der Flankenlinie einen Winkel von > 10° bis < 170° mit einer Tangente an den Kreisbogen in dem sich ergebenden Schnittpunkt mit der Verzahnung bildet. Dadurch wird sichergestellt, dass die Verzahnung sich zum einen nicht nur in den Außenbereichen der Koppelflächen befindet und ferner sich die Verzahnung in Bereiche erstrecken kann, die möglichst nahe am Lagerteil liegen. Damit wird über große Flächen eine selbstzentrierende Wirkung in einer Ebene senkrecht zur Anschlussebene an das Anschlusselement realisiert.

Gemäß einer besonders vorteilhaften Ausführung wird die Verzahnung als Hirth-Verzahnung ausgeführt. Diese erstreckt sich kreisbogenförmig entlang der Koppelfläche, vorzugsweise über die gesamte Erstreckung der Koppelfläche von einem Außenbereich, d. h. Außenumfang bis zum nächsten, wobei das Kreisringsegment ausgehend von den Außenumfängen über den Lagerteil verläuft. Der Kreisring bzw. Kreisbogen ist dabei durch einen Radius charakterisiert, dessen Mittelpunkt entweder mit der Gelenkachse zusammenfällt oder aber exzentrisch zu dieser angeordnet ist, wobei der Mittelpunkt entweder im Bereich der Koppelfläche liegt, vorzugsweise innerhalb von 2/3 der maximalen Höhenabmessung der Koppelfläche, ausgehend von der Stirnfläche, oder aber in einem Abstand von der Koppelfläche bzw. der Stirnfläche, der ≤ des zweifachen Betrages der maximalen Abmessung der Koppelfläche in vertikaler Richtung ist, außerhalb der Gelenkgabel, d. h. in Richtung des Anschlusselementes angeordnet ist.

Vorzugsweise werden jeweils symmetrische Ausführungen der Koppelflächen, bezogen auf die in die Koppelfläche projizierte Gelenkachse, gewählt. Denkbar sind auch unsymmetrische Ausführungen, wobei symmetrische Ausführungen aufgrund der freien Austauschbarkeit der miteinander in Wirkverbindung bringbaren Gelenkgabelhälften zu bevorzugen sind.

Die erfindungsgemäße Lösung, insbesondere mit vorgesehener Hirth-Verzahnung, zeichnet sich dadurch aus, dass örtlich auftretende Belastungsspitzen, die sich negativ auf die Verzahnung auswirken, nahezu ausgeschlossen werden können, da hier eine gleichmäßige Lastverteilung über die gesamte Koppelfläche, insbesondere die Hirth-Verzahnung, erzielt wird.

Die Koppelflächen selbst können vorzugsweise durch eine Ebene oder mehrere Ebenen charakterisiert sein. Bei Ausführungen der Koppelflächen mit einer Ebene ist diese vorzugsweise dadurch charakterisiert, dass diese vorzugsweise senkrecht zu einer Ebene ausgerichtet ist, die durch die Zapfenachse des in der Gelenkgabel gelagerten Zapfens und die Gelenkachse charakterisiert ist. Ausführungen mit geneigten Ebenen sind ebenfalls denkbar, jedoch von der Lastaufnahme zum Teil ungünstiger. Bei Ausführung mit mehreren Ebenen sind diese vorzugsweise parallel zueinander versetzt angeordnet.

Es besteht jedoch auch die Möglichkeit einer unsymmetrischen Gestaltung der Fußteile beider Gelenkgabelhälften, d. h. die Koppelfläche besteht aus Teilflächen, welche in unterschiedlichen Ebenen angeordnet sind. In diesem Fall kann beispielsweise eine der beiden Gelenkgabelhälften eine Aussparung aufweisen, während die andere Gelenkgabelhälfte die dazu komplementäre Überlappung besitzt, wodurch die Lage beider Gelenkgabelhälften zueinander genau definiert ist. Die Verzahnungen können dann in den von den Überlappungen und Ausnehmungen gebildeten Bereichen der Koppelfläche angeordnet sein.

Aufgrund der an der von der Zapfenachse weggerichteten Flanschunterseite angebrachten Mittel zur kraft- und/oder formschlüssigen Verbindung zum Zwecke der Drehmomentenübertragung und Zentrierung mit dazu komplementär ausgeführten Mitteln an den Anschlusselementen, welche vorzugsweise als Hirth-Stirnverzahnung, deren Flankenlinien sich bezogen auf die Gelenkgabelachse in radialer Richtung erstrecken, ausgeführt sind und zusätzlichen Schraubverbindungen zwischen Flanschmitnehmer und Anschlussteil wird mit der anschließenden Welle bzw. dem Anschlussteil zusätzlich eine selbstzentrierende und kraftschlüssige Verbindung eingegangen. Diese verhindert die Relativbewegung der Gelenkgabelhälften gegeneinander parallel zur Zapfenachse des in dieser Gelenkgabel gelagerten Zapfens bzw. senkrecht zur Gelenkgabelachse.

Vorzugsweise liegt die Gelenkgabelachse in der Symmetrieebene zwischen den beiden Gelenkgabelhälften und steht senkrecht zur Zapfenachse des in dieser Gelenkgabel gelagerten Zapfens. Die Symmetrie der beiden Gelenkgabelhälften ist fertigungstechnisch sehr leicht zu realisieren, jedoch nicht zwingend. Vorzugsweise ist die Verzahnung derart ausgeführt, dass die Flankenlinien bzw. deren Verlängerung bei Projizierung in eine Ebene mit der Gelenkgabelachse senkrecht zur Gelenkgabelachse verlaufen und senkrecht zu einer Ebene, die von der Gelenkgabelachse und einer Zapfenachse eines in der Gelenkgabel gelagerten Zapfens gebildet wird.

Vorzugsweise wird man die Verzahnung an den Trennflächen in der gleichen Verzahnungsgröße wie die Hirthstirnverzahnung an der Unterseite des Flanschmitnehmers vorsehen. Damit wird die Möglichkeit geschaffen, bereits vorhandene Werkzeuge effektiver ausnutzen zu können.

Die erfindungsgemäße Lösung wird nachfolgend anhand von Figuren erläutert. Darin ist im einzelnen folgendes dargestellt:
Figuren 1 a und 1 b verdeutlichen in schematisch vereinfachter Darstellung anhand einer Perspektivansicht eine erfindungsgemäß ausgestaltete Gelenkgabel in Form eines Flanschmitnehmers in demontierter Darstellung und in Zusammenbaudarstellung;
Figur 2 verdeutlicht die Problematik der Wirkung der Umfangskraft gemäß einer Ausführung aus dem Stand der Technik;
Figur 3 verdeutlicht in schematisch vereinfachter Darstellung eine alternative Ausführungsform gemäß Figur 1 mit Hirth-Verzahnung;
Figur 4 verdeutlicht eine Ausführung mit einzelnen Verzahnungssegmenten;
Figur 5 verdeutlicht eine weitere Ausführung mit Verzahnungssegmenten;
Figur 6 verdeutlicht eine Ausführung mit Bogenverzahnung.

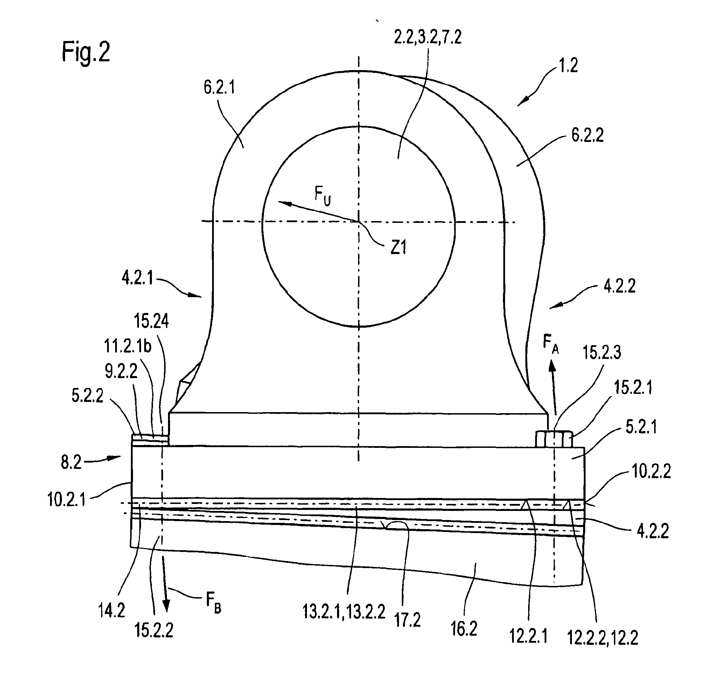

Die Figur 2 verdeutlicht stark übertrieben gemäß dem Stand der Technik in einer Ansicht von vorn auf einen in Form einer Gelenkgabel ausgebildeten Flanschmitnehmer 1.2 die Wirkung der Umfangskraft F_{U}, welche bei der Übertragung eines Drehmomentes an den im Flanschmitnehmer 1.2 gelagerten Zapfen 2.2 und 3.2 angreift, auf die zwei Gelenkgabelhälften 4.2.1 und 4.2.2 des Flanschmitnehmers. Beide Gelenkgabelhälften 4.2.1 und 4.2.2 umfassen jeweils einen Fußteil 5.2.1 bzw. 5.2.2 und einen Lagerteil 6.2.1 bzw. 6.2.2 zur Lagerung der Zapfen 2.2 bzw. 3.2 eines Zapfenkreuzes 7.2. Beide Gelenkgabelhälften 4.2.1 und 4.2.2 sind im Bereich ihres Fußteiles formschlüssig miteinander unter Bildung eines Flanschteiles 8.2 verbunden. Der Formschluss wird durch die entsprechende Ausgestaltung der zueinander weisenden und hier nur zum Teil dargestellten Koppelflächen 9.2.1 und 9.2.2 an den Fußteilen 5.2.1 bzw. 5.2.2 realisiert. Dazu weisen die einzelnen Fußteile, der Fußteil 5.2.1 der ersten Gelenkgabelhälfte 4.2.1 und 5.2.2 der zweiten Gelenkgabelhälfte 4.2.2 an ihrer zum Fußteil der jeweils anderen Gelenkgabelhälfte 4.2.2 bzw. 4.2.1 weisenden Koppelfläche 9.2.2 bzw. 9.2.1 im Bereich des jeweiligen Außenumfanges 10.2.1 bzw. 10.2.2 eine zueinander komplementäre Verzahnung, umfassend die Teilverzahnungen 11.2.1 b und hier nicht dargestellt 11.2.1 a bzw. 11.2.2a und 11.2.2b auf. Diese Verzahnungen 11.2.1a und 11.2.1b bzw. die dazu komplementären Verzahnungen 11.2.2a und 11.2.2b erstrecken sich jeweils vom Außenumfang 10.2.1 bzw. 10.2.2 der einzelnen Gelenkgabelhälfte in Richtung zur Gelenkgabelachse (G), unter welcher die Rotationsachse des Flanschmitnehmers 1.2 verstanden wird. Die Erstreckung erfolgt dabei jeweils über einen Teilbereich der Koppelflächen 9.2.1 bzw. 9.2.2. Die Verzahnungen 11.2.1a bzw. 11.2.1 b und 11.2.2a bzw. 11.2.2b sind bei Ausbildung als Stirnverzahnung derart ausgeführt, dass die Verlängerung einer Flankenlinie der Verzahnung oder bei Ausbildung als Bogenverzahnung - die Verlängerung der Sekante durch die Endpunkte der Flankenlinie eines Verzahnungselementes der Verzahnung - einen Winkel von größer als 0° bis kleiner 180° mit einer Ebene, welche durch die Zapfenachse Z1 des in einer Gelenkgabelhälfte 4.2.1 gelagerten Zapfens 2.2 und einer mit einer Rotationsachse des Flanschmitnehmers 1.2. zusammenfallenden Gelenkgabelachse (G) gebildet wird, einnimmt. Der Flanschmitnehmer 1.2, insbesondere die beiden Gelenkgabelhälten 4.2.1 und 4.2.2 weisen an der vom Lagerteil 6.2.1 bzw. 6.2.2 abgewandten Stirnseite 12.2.1 bzw. 12.2.2 Mittel 13.2.1 bzw. 13.2.2 zur Realisierung einer form- und/oder kraftschlüssigen Verbindung zur Realisierung der Drehmomentübertragung und Zentrierung des Flanschmitnehmers 1.2 in der Verbindungsebene mit einem Anschlusselement, insbesondere in Form eines Wellenstranges 16.2 auf. Die Mittel umfassen dabei eine auf der von den Lagerteilen 6.2.1 bzw. 6.2.2 weggerichteten Stirnseite 12.2.1 bzw. 12.2.2 unter Bildung der Gesamtstirnseite 12.2 des Flanschmitnehmers 1.2 angebrachte, axial ausgerichtete und radial an der Flanschunterseite angeordnete Hirth-Stirn-Verzahnung 14.2. Unter Hirth-Stirn-Verzahnung wird dabei eine Verzahnung verstanden, bei welcher die geometrischen Linien der einzelnen Verzahnungselemente sich in einem gemeinsamen Punkt M treffen. Dabei differiert die Verzahnungshöhe vom Mittelpunkt M aus betrachtet, welcher auf der Gelenkgabelachse G liegt bis zum Außenumfang 10.2.1 bzw. 10.2.2 der einzelnen Fußteile 5.2.1 bzw. 5.2.2 des Flanschmitnehmers 1.2. Die Sicherung in axialer Richtung erfolgt über Schraubverbindungen 15.2, hier 15.2.1, 15.2.2 bzw. 15.2.3, 15.2.4 an der gegenüberliegenden Gelenkgabelhälfte zwischen dem Flanschmitnehmer 1.2 und dem entsprechenden Anschlusselement in Form eines Wellenstranges 16.2. An dessen zum Flanschmitnehmer 1.2 ausgerichteten Stirnseite 17.2 ist eine zur Hirth-Stirn-Verzahnung 14.2 an der Stirnseite 12.2.1 bzw. 12.2.2 des Flanschmitnehmers 1.2 komplementär ausgeführte Hirth-Stirn-Verzahnung angeordnet. Die beiden komplementär zueinander ausgeführten Hirth-Stirn-Verzahnungen 14.2 an der Flanschunterseite 12.2 des Flanschmitnehmers 1.2 und der zum Flanschmitnehmer 1.2 ausgerichteten Stirnseite 17.2 des Anschlusselementes in Form des Wellenstranges 16.2 bilden bei entsprechender Vorspannung über die Schraubverbindungen 15.2 eine selbst zentrierende Verbindung.

Eine aufgrund des zu übertragenden Drehmomentes an der Gelenkgabel angreifende Umfangskraft Fᵤ bewirkt im Zusammenhang mit einer hier nicht dargestellten Verformung der Gelenkgabelhälften eine entsprechende Kraftwirkung auf die Flanken der Verzahnungen 11.2.1 a bzw. 11.2.1 b und 11.2.2a bzw. 11.2.2b, welche bei entsprechender Höhe der Kraft zu Beschädigung und Verschleiß im Bereich einzelner Verzahnungselemente der Verzahnungen führen kann. Die Wirkung der Umfangskraft Fᵤ führt des weiteren zu unterschiedlichen Kraftkomponenten, die an den einzelnen Schraubverbindungen 15.2.1, 15.2.2, 15.2.3, 15.2.4 wirksam werden und damit zu unterschiedlichen Beanspruchungen der Verbindung zwischen dem Flanschmitnehmer 1.2 und dem Anschlusselement in Form des Wellenstranges 16.2. Diese können bei Auftreten von Verschleiß an den Verzahnungen 11.2.1 bzw. 11.2.1 und 11.2.2 bzw. 11.2.2 auch zu Spiel und zu Microrelativbewegungen zwischen den Verzahnungen an der Flanschunterseite, d. h. an den von den Lagerteilen 6.2.1 und 6.2.2 weggerichteten Stirnflächen 12.2.1 bzw. 12.2.2 der Fußteile 5.2.1 bzw. 5.2.2 und an der zum Flanschmitnehmer 1.2 ausgerichteten Stirnseite 17.2 führen. Diese Relativbewegungen fördern wiederum den Verschleiß durch Microbewegung der an den Koppelflächen 9.2.1 bzw. 9.2.2 zueinander komplementär ausgeführten Verzahnungen 11.2.1, 11.2.1 bzw. 11.2.2 bzw. 11.2.2 und der zueinander komplementären Verzahnungen am Wellenstrang 16.2 und der Unterseite des Flanschmitnehmers 1.2, welche von den einzelnen Stirnseiten 12.2.1 bzw. 12.2.2 der Fußteile 5.2.1 bzw. 5.2.2 der Gelenkgabelhälften 4.2.1 bzw. 4.2.2 unter Bildung der Gesamtstirnfläche 12.2, gebildet wird. An den beschädigten Oberflächen und den resultierenden Hohlräumen besteht die Möglichkeit der Ansammlung von Feuchtigkeit und Kriechwasser, welche wiederum zu Korrosion führen kann. Der Korrosionseffekt wird durch die Bewegung an den Kontaktstellen der einzelnen Verzahnungen miteinander noch zusätzlich verstärkt.

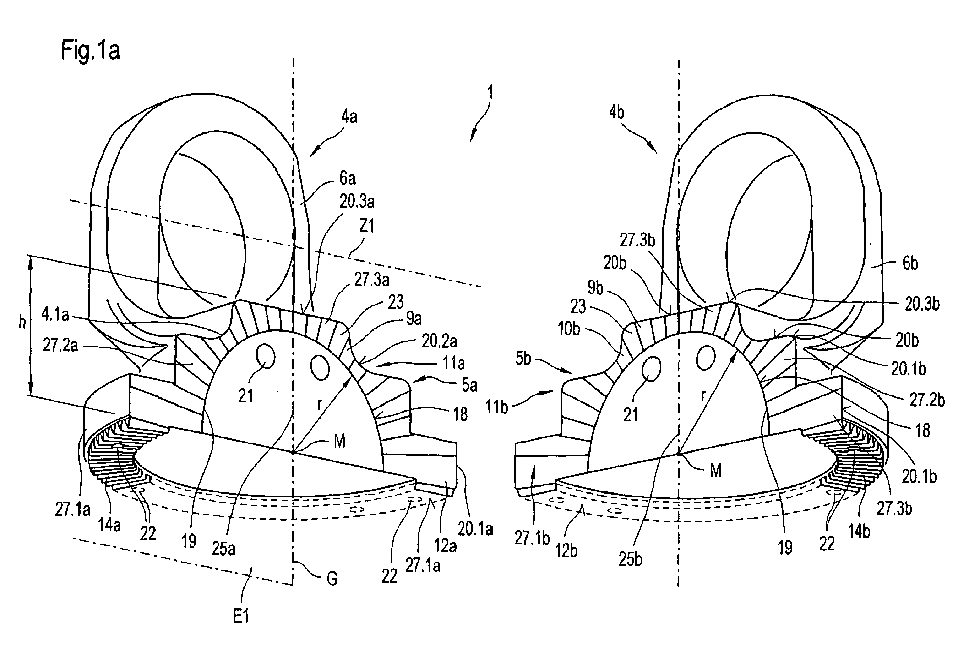

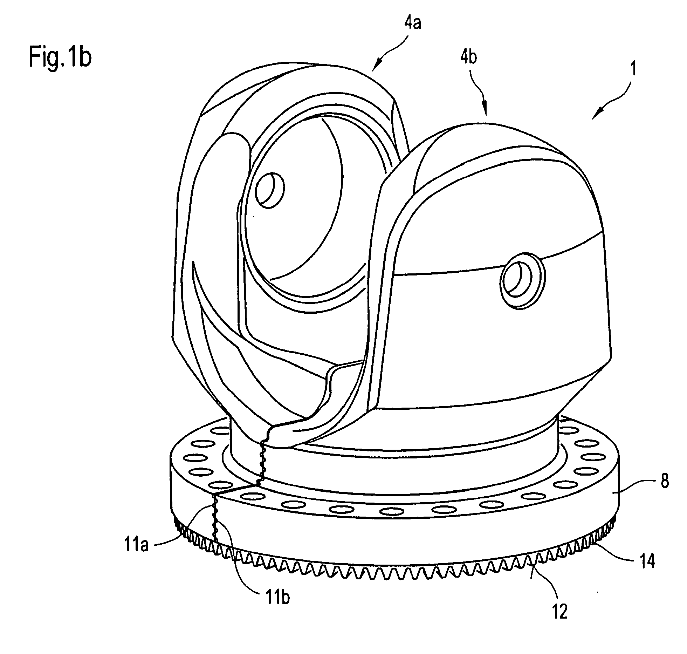

Die Figur 1 verdeutlicht in einer Perspektivansicht zwei erfindungsgemäß gestaltete und eine Gelenkgabel in Form eines Flanschmitnehmers 1 bildende Gelenkgabelhälften 4a und 4b. Diesen umfassen jeweils einen Fußteil 5a und 5b und einen Lagerteil 6a und 6b zur Aufnahme der Lageranordnung zur Lagerung der Zapfen des Zapfenkreuzes in der Gelenkgabel. Der Fußteil 5a bzw. 5b einer Gelenkgabelhälfte 4a bzw. 4b kann vielgestaltig ausgeführt sein. Denkbar sind Ausführungen mit gleichmäßigem Übergang zwischen dem Lagerteil 6a bzw. 6b zum Fußteil und Ausführung des Fußteils 5a bzw. 5b mit unveränderlichen Querschnittsabmaßen. Im dargestellten Fall sind auch hier der Fußteil 5a bzw. 5b im Bereich unterschiedlicher Querschnittsabmessungen unterteilt. Der Bereich der größten Abmessung bildet dabei auch die einzelnen, die Stirnseite 12 der Gelenkgabel bzw. des Flanschmitnehmers 1 bildenden Stirnseiten 12a bzw. 12b, welche vom jeweiligen Lagerteil weggerichtet sind und die die zur Drehmomentübertragung erforderliche Hirthstirnverzahnung 14a 14b tragen. An den jeweils zueinander weisenden Koppelflächen 9a bzw. 9b, welche im dargestellten Fall in einer Ebene mit der Gelenkachse liegen, vorzugsweise in einer Ebene E, die senkrecht zu einer Ebene, die durch die Gelenkachse G und die Zapfenachse des in der Gelenkgabel gelagerten Zapfens gebildet wird, angeordnet ist. Die Koppelflächen 9a und 9b sind dabei entweder in dieser Ebene angeordnet oder aber parallel zu ihr. Erfindungsgemäß sind eine Mehrzahl einzelner Verzahnungselemente an den einzelnen zueinander weisenden Koppelflächen 9a bzw. 9b vorgesehen, die sternförmig verlaufen. Gemäß Figur 1a ist eine Ausführung mit Hirth-Stirnverzahnung 11a bzw. für die Koppelfläche 9b mit 11 b bezeichnet, vorgesehen. Diese ist auf einem Radius r angeordnet, welcher einen Kreisbogen 19 an der Koppelfläche beschreibt und erstreckt sich, ausgehend von diesem Kreisbogen, insbesondere dem Außenumfang 18 des Kreisbogens 19, in radialer Richtung von dieser weg. Die Verzahnung erstreckt sich dabei entsprechend der in der Figur 1 a dargestellten Ausführung in Teilbereiche des Flanschmitnehmers zumindest bis an die Außenkontur 20 der die Koppelfläche 9a bzw. 9b bildenden Bereiche. Unter einer Hirthverzahnung wird dabei eine Verzahnung verstanden, welche derart ausgeführt ist, dass die geometrischen Linien der Stirnverzahnung keilförmig ausgebildet werden und zentral an einem Punkt zusammenführen. Dieser ist hier durch den Mittelpunkt für den Radius des Kreisbogens 19 bestimmt. Dieser Mittelpunkt ist mit M bezeichnet und liegt vorzugsweise auf der Gelenkachse G, wobei die Anordnung im Bereich der Koppelfläche 9a bzw. 9b erfolgen kann. Im dargestellten Fall erfolgt die Anordnung im Schnittpunkt der Stirnfläche 12 mit der Gelenkachse G. Bei der Verzahnung selbst handelt es sich um eine Keilverzahnung, deren einzelne Flanken sich im wesentlichen mittels jeweils einer Ebene beschreiben lassen. Die Verzahnung selbst ist in Umfangsrichtung, hier des Umfanges des Kreisbogens 19, angeordnet. Die einzelnen Verzahnungselemente, d. h. Zähne, erstrecken sich in radialer Richtung, bezogen auf den Dreh- bzw. Mittelpunkt M des Kreisbogens 19. Die Flanken sind jeweils in radialer Richtung ausgerichtet. Die Zahnhöhe differiert in radialer Richtung, ausgehend von dem Dreh- bzw. Mittelpunkt M des Kreisbogens 19 betrachtet, bezüglich der Höhe und Abmessungen des einzelnen Verzahnungselementes und der Abmessung der Verzahnung. Die Verzahnung ist zum Mittelpunkt M hin geneigt ausgeführt.

Entsprechend der in der Figur 1 a dargestellten Ausführung erstreckt sich die Verzahnung entlang des Außenumfanges des Kreisbogens 19 von der Stirnseite 12 bzw. 12a, 12b ausgehend in Umfangsrichtung auf dem vertikal angeordneten Kreisbogen 19 bis in den Bereich des Schnittpunktes des Kreisbogens 19 mit der Stirnseite 12a, 12b. Die Verzahnung ist dabei gleichmäßig ohne Verzahnungslücken in Umfangsrichtung des Kreisbogens 19 angeordnet. Diese wirkt mit einer komplementär dazu ausgeführten Verzahnung an der Koppelfläche 9b der zweiten Gelenkgabelhälfte 4b zusammen. Die axiale Verspannung erfolgt über Befestigungselemente, welche durch dargestellte Durchgangsöffnungen 21 angedeutet sind. Der Anschluss an das Anschlusselement erfolgt, wie bereits ausgeführt, über die formschlüssige Verzahnung an der Stirnseite 12a bzw. 12b im Zusammenwirken mit der dazu komplementär ausgebildeten Verzahnung am Anschlusselement, wobei die Sicherung in axialer Richtung ebenfalls über Befestigungselemente, die hier durch die angedeuteten Durchgangsöffnungen 22 im Flanschbereich, d. h. im Fußteil 5a bzw. 5b vorgesehen sind, geführt werden.

Aufgrund der selbstzentrierenden Verbindung bei Drehmoment übertragender Umfangsrichtung infolge der Hirth-Stirnverzahnung an den Stirnseiten 12a, 12b der Flansch- bzw. Fußteile 5a und 5b der einzelnen Gelenkgabelhälften 4a bzw. 4b im Zusammenwirken mit der entsprechenden Koppelverzahnung an den hier nicht dargestellten Anschlusselementen und die in einer, wie in der Figur 1 dargestellt, vorzugsweise senkrecht dazu angeordneten weiteren zweiten Hirthstirnverzahnung ermöglicht eine vollkommene selbstzentrierende Verbindung sowohl in Umfangsrichtung als auch in Richtung parallel zur Gelenkgabelachse G.

Unter Gelenkgabelachse wird dabei die Achse verstanden, die die Rotationsachse des Anschlusselementes mit dem Schnittpunkt der Zapfenachsen verbindet, wobei bei Anordnungen mit zueinander versetzten Zapfen in parallelen Ebenen hier die beiden Ebenen in eine projiziert werden. Im dargestellten Fall verlaufen damit auch die Flankenlinien 25a für die Verzahnung an der ersten Koppelfläche 9a und 25b jeweils bezogen auf den Mittelpunkt des Kreisbogens 19 in radialer Richtung. Dies bedeutet, dass die Verzahnung, insbesondere die Flankenlinie, derart ausgerichtet ist, dass diese gegenüber einer Tangente an den Außenumfang 20 des Kreisbogens 19 am jeweiligen Punkt senkrecht zu dieser bei Projizierung in die Koppelfläche verläuft. Die Flankenlinien 25a, 25b schneiden sich im Mittelpunkt M.

Bei der Ausführung gemäß Figur 1 a ist dabei der Fußteil im wesentlichen in drei, die Kontur der Koppelfläche bestimmende unterschiedliche Abschnitte unterteilt. Ein erster Abschnitt ist mit 27.1 a, ein zweiter mit 27.2a und ein dritter mit 27.3a für die Gelenkgabelhälfte 4a und mit 27.1 b, 27.2b und 27.3b für die Gelenkgabelhälfte 4b bezeichnet. Diese bestimmen damit unterschiedliche Außenkonturbereiche 20.1 a bis 20.3a für die Gelenkgabelhälfte 4a und 20.1 b bis 20.3b für die Gelenkgabelhälfte 4b. Dabei erstreckt sich die dargestellte Hirthstirnverzahnung vorzugsweise jeweils ausgehend von der Außenkontur bzw. dem Kreisbogen 19 bis zum jeweiligen, die Außenkonturen bestimmenden Außenumfang. Denkbar sind jedoch auch, wie hier dargestellt, in den die Außenkontur 20.1 a bzw. 20.1b bildenden Bereichen unterschiedlicher Abmessungen 27.1 a und 27.1 b die Ausbildung mit von der Verzahnung freien Bereichen. Die Bereiche 27.2a und 27.2b bilden dabei den Anschlussbereich an den ersten Bereich und die Bereiche 27.3a und 27.3b werden vom unmittelbaren Verbindungsflansch gebildet, wobei dieser auch die Stirnseite 12a bzw. 12b bildet. Der Bereich 27.2a bzw. 27.2b ist dabei zwischen den Bereichen 27.1 a und 27.3a bzw. 27.1 b und 27.3b angeordnet.

Der Mittelpunkt des Kreisbogens, d. h. der Radius, wird dabei vorzugsweise derart gewählt, dass dieser im Bereich, bezogen auf die Höhe der ausgebildeten Koppelfläche h, ausgehend von der Stirnseite 12a bzw. 12b in einem Bereich von zwei Drittel h bis - 2 x h liegt. - 2 x h beschreibt dabei die maximale Anordnung des Drehpunktes außerhalb der Koppelfläche 9a, 9b.

Die Figur 1b verdeutlicht anhand einer Seitenansicht den erfindungsgemäß gestalteten Flanschmitnehmer 1 im montierten Zustand, d. h. in Einbaulage. Zu erkennen ist ferner der Wellenschrank 16, welcher mit dem Flanschmitnehmer 1 gekoppelt ist.

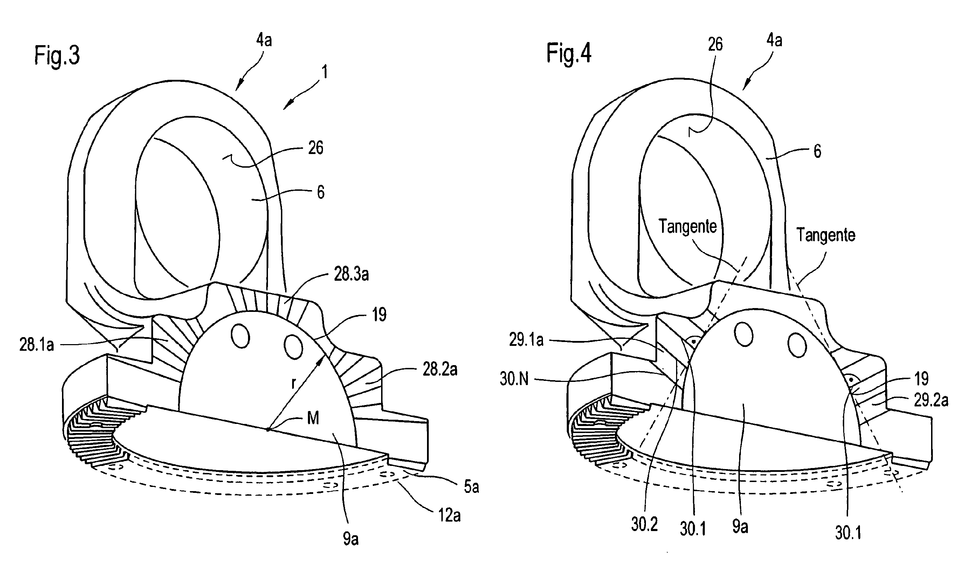

Verdeutlicht die in der Figur 1 wiedergegebene Ausführung eine besonders vorteilhafte Ausgestaltung mit Hirthstirnverzahnung, vorzugsweise über die gesamte Breite der Koppelfläche 9a bzw. 9b, wobei die Einbettung mit des letzten Verzahnungselementes im Bereich des Schnittpunktes der Stirnfläche 12a bzw. 12b mit dem Kreisbogen 19 erfolgt, verdeutlicht die Figur 3 eine Ausführung mit hirthstirnverzahnten Segmenten. Im dargestellten Fall sind dabei Einzeisegmente 28.1 a bis 28.3a an der Koppelfläche 9a der Gelenkgabelhälfte 4a vorgesehen, die ebenfalls jeweils eine Vielzahl einzelner Verzahnungselemente, vorzugsweise wenigstens zwei, umfassen, die einander benachbart angeordnet sind und die in analoger Weise zu der in der Figur 1 dargestellten Ausführung auf einem Kreisbogen 19 angeordnet sind und sich von diesem, ausgehend in radialer Richtung, erstrecken. Die einzelnen Elemente sind dabei in Umfangsrichtung, bezogen auf den Kreisbogen 19, zueinander beabstandet angeordnet. Die Segmente 28.1 a und 28.2a befinden sich dabei jeweils im Bereich des Außendurchmessers des Fußteils 5a, d. h. jeweils in einem durch einen Kreisbogen beschreibbaren Abstand a von der Stirnseite 12a ausgehend am Kreisbogen 19 angeordnet. Das dritte Segment ist dabei vorzugsweise im Mittenbereich angeordnet und befindet sich dabei, bezogen auf die Stirnfläche 12a, am höchsten Punkt oder im Bereich der größten vertikalen Abmessungen der Koppelfläche 9a. Auch hier bildet den Ausgangspunkt für die Anordnung wiederum der Kreisbogen 19, wobei dieser durch einen Mittel- bzw. Drehpunkt für den Radius r bestimmt werden kann, welcher in Analogie zu den in der Figur 1 getätigten Ausführungen ausgelegt werden kann.

Die in der Figur 3 wiedergegebene Möglichkeit der segmentweisen Anordnung ist beispielhaft. Dabei wurde hier eine symmetrische Ausführung, bezogen auf die in die Ebene der Koppelfläche projizierte Gelenkgabelachse, gewählt. Ferner denkbar sind Ausführungen mit unsymmetrischer Anordnung, wobei in diesem Fall keine Austauschbarkeit zwischen zwei miteinander in Wirkverbindung stehenden Gelenkgabelhälften 4a und 4b gegeben wäre, sondern dann konkret auf die Ausgestaltung der Koppelflächenkontur, insbesondere der dort angebrachten Verzahnung, zu achten wäre.

Verdeutlichen die Figuren 1 und 3 Ausführungen mit Hirthstirnverzahnung und der dieser inherenten Merkmale, ist es auch denkbar, eine gerade Stirnverzahnung zu wählen, welche ebenfalls sternförmig ausgeführt an der Koppelfläche 9a angeordnet ist. Diesbezüglich ist in der Figur 4 eine weitere Ausführung wiedergegeben, bei welcher die Anordnung der Geradverzahnung beispielhaft in zwei Segmenten erfolgt, einem ersten Segment 29.1a und einem zweiten Segment 29.2a, wobei jedes Verzahnungssegment wenigstens zwei Verzahnungselemente 30.1, 30.2 bis 30.n umfasst. Die einzelnen Verzahnungssegmente 29.1a, 29.2a bzw. die Verzahnungselemente in diesen Segmenten sind dabei derart angeordnet, dass ein Verzahnungselement ebenfalls ausgehend von einem Kreisbogen 19 senkrecht zur Tangente in diesen Punkt verläuft und alle mit gleicher Verzahnungshöhe, ausgehend vom Kreisbogen in Richtung zur Außenkontur 20, verlaufen. Die weiteren Verzahnungselemente eines Segmentes 29.1 a, 29.1 b sind dabei parallel zueinander angeordnet, und dies bedeutet, dass lediglich ein Verzahnungselement beispielsweise im rechten Winkel zur Tangente an den Kreisbogen angeordnet ist, während die weiteren Verzahnungselemente parallel zu diesem ersten Verzahnungselement verlaufen, insbesondere bei Ausbildung mit Geradverzahnung die Flankenlinien dieser parallel zueinander ausgerichtet sind. Daraus ergibt sich, dass die jeweils benachbart zu dem senkrecht zu einer theoretischen Tangente an den Kreisbogen verlaufende Flankenlinie eines ersten Verzahnungselementes 30.1 parallel angeordneten weiteren Verzahnungselemente hinsichtlich ihrer Flankenlinie in einem Winkel zur Tangente an den Schnittpunkt der verlängerten Flankenlinie mit dem Kreisbogen 19 dieses Verzahnungselementes angeordnet sind. Der Winkelbereich beträgt dabei, je nach Ausführung, insbesondere Breite des einzelnen Verzahnungssegmentes 29.1a, 29.2a zwischen 40° und 130°, vorzugsweise 60° bis 120°.

Die einzelnen Verzahnungssegmente 29.1a, 29.2a, insbesondere die einzelnen Verzahnungselemente 30.1 bis 30.n, können dabei derart ausgeführt sein, dass diese jeweils auf einem theoretischen Kreisbogen 19 anfangen. Denkbar sind jedoch auch Ausführungen, bei denen sich aufgrund der parallelen Anordnung der einzelnen Verzahnungselemente eine Anordnung als Schrägverzahnung an der Koppelfläche 9a, 9b ergibt, wobei in diesem Fall die einzelne Verzahnung sich über die Segmente bzw. Bereiche 27.1 a und 27.2a erstreckt. Ferner ist eine derartige Anordnung auch noch im Bereich 27.3a möglich. Dies bedeutet, dass die Anordnung der Verzahnung in einem Winkel zur Stirnfläche 12a an der Koppelfläche 9a erfolgt. Dabei verlaufen insbesondere die Flankenlinien 25a der Verzahnung 11 a in einem Winkel zur Stirnseite 12a. Die Verzahnung erstreckt sich nicht über die gesamte Koppelfläche 9a. Die Flankenlinien 25a verlaufen in einem Winkel, vorzugsweise von 90° gegenüber einer Geraden X1, die in der Koppelfläche 9a liegt und in einem Winkel von 90° und 180° zur Gelenkachse G bei Projizierung in die Koppelfläche 9a verläuft.

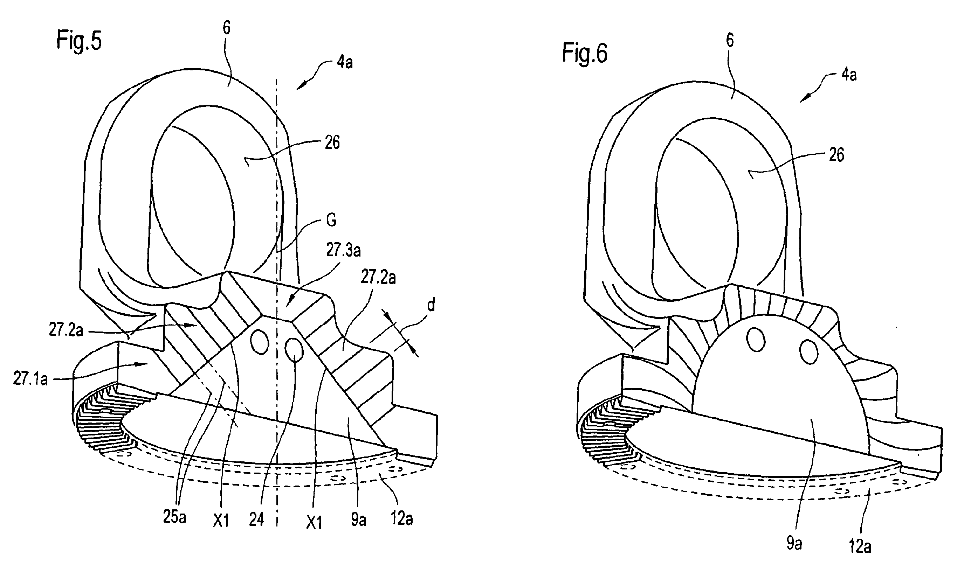

Bei der in der Figur 5 dargestellten Ausführung wird der Abstand d zwischen den einzelnen Verzahnungselementen gleich gewählt. Denkbar sind auch Ausführungen mit unsymmetrischer Anordnung. Die durch den Abstand d beschreibbaren Zwischenbereiche an der Koppelfläche 9a beschreiben Teilflächen, welche frei von einer Verzahnung sind. Diesen Bereichen werden vorzugsweise die Mittel 23 zur Verspannung der beiden Gelenkgabelhälften angeordnet. Diese erfolgt in der Regel mit Schraubverbindungen oder anderer verspannbarer Befestigungselemente. In der entsprechenden Gelenkgabelhälfte 4a sind dazu Durchgangsöffnungen 24 vorgesehen. Auch bei der Ausführung gemäß Figur 5 wird durch die komplementären Ausführungen der Verzahnungen an den Koppelflächen 9a, 9b zweier miteinander in Verbindung bringbarer Gelenkgabelhälften eine formschlüssige Verbindung zwischen diesen realisiert, welche eine Relativbewegung der beiden Gelenkgabelhälften bzw. senkrecht zu einer Ebene, welche durch die Gelenkgabelachse G und einer senkrechten zur Zapfenachse Z1 des in dieser Gelenkgabel gelagerten Zapfens, welche mit der Zapfenachse des senkrecht zu diesem Zapfen angeordneten Zapfens zusammenfällt, vermeidet. Die einzelnen Gelenkgabelhälften erfahren dabei selbst bei Beschädigung der Verzahnungen eine Selbstzentrierung, da der Formschluss in der Koppelebene im wesentlichen in zwei Richtungen erfolgt. Die Verspannung der beiden Gelenkgabelhälften gegeneinander, welche mit entsprechenden Mitteln 23 erfolgt, welche beispielsweise als Befestigungselemente ausgeführt sind, wird auf die beschriebene Art und Weise einfach realisiert. Bei den Befestigungselementen kann es sich dabei um Spannbolzen oder aber auch Schraubverbindungen handeln, wobei in diesem Fall die Durchgangsöffnung an einer der Gelenkgabelhälften mit einem entsprechenden Gewinde zu versehen wären. Die konkrete Auswahl und Ausführung der Mittel zur Verspannung 23 liegt dabei im Ermessen des zuständigen Fachmannes, des weiteren deren Anordnung. Vorzugsweise werden diese jedoch im Bereich geringster Beanspruchung des gesamten Flanschmitnehmers angeordnet.

Betreffen die Figuren 1 bis 5 Ausführungen mit Hirthstirnverzahnung oder Geradverzahnung, ist es auch denkbar, an der Koppelfläche 9a gemäß Figur 6 eine Bogenverzahnung vorzusehen, welche ebenfalls kreisförmig angeordnet ist. Für die Anordnung der Bogenverzahnung ergeben sich dabei die gleichen Möglichkeiten wie für die Hirthverzahnung. Diese kann sich dabei kreisbogenartig über die Koppelfläche erstrecken, wobei im Mittenbereich der Koppelfläche vorzugsweise diese sich bis in den Bereich der größten Erstreckung, ausgehend von der Stirnfläche 12a, erstreckt. Die Flankenlinien sind durch Richtungsänderung beschreibbar. Die Winkelangabe bezüglich des Verlaufs und der Ausrichtung der Bogenverzahnung erfolgt dabei über eine Sekante 27 an die jeweilige Flankenlinie. Diese verläuft in einem Winkel von β = 90° zu einer Ebene 1, welche von der Zapfenachse Z1 des in der Gelenkgabel gelagerten Zapfens, welche der Achse der Lagerbohrung entspricht und der Gelenkgabelachse B gebildet wird. Die Lagerbohrung ist auch hier mit 26 bezeichnet. Der Lagerteil mit 6.

### Bezugszeichenliste

- 1, 1.2: Flanschmitnehmer
- 2.2: Zapfen
- 3.2: Zapfen
- 4a, 4.2.1: erste Gelenkgabelhälfte
- 4.2.2: zweite Gelenkgabelhälfte
- 5a, 5.2.1: Fußteil der ersten Gelenkgabelhälfte
- 5b, 5.2.2: Fußteil der zweiten Gelenkgabelhälfte
- 6a, 6.2.1: Lagerteil der ersten Gelenkgabelhälfte
- 6b, 6.2.2: Lagerteil der zweiten Gelenkgabelhälfte
- 7, 7.2: Zapfenkreuz
- 8, 8.2: Flanschteil
- 9a, 9.2.1: Koppelfläche der ersten Gelenkgabelhälfte
- 9b, 9.2.2: Koppelfläche der zweiten Gelenkgabelhälfte
- 10a, 10.2.1: Außenumfang des Fußteiles der ersten Gelenkgabelhälfte
- 10b, 10.2.2: Außenumfang des Fußteiles der zweiten Gelenkgabelhälfte
- 11 a: erste Verzahnung an der ersten Gelenkgabelhälfte
- 11.b: erste Verzahnung an der zweiten Gelenkgabelhälfte
- 12, 12.2: Gesamtstirnseite des Flanschteiles
- 12a, 12.2.1: Stirnseite
- 12b, 12.2.2: Stirnseite der zweiten Gelenkgabelhälfte
- 13a, 13.2.1: Mittel zur form- und/oder kraftschlüssigen Verbindung zur Realisierung der Drehmomentübertragung und Verbindung mit einem Anschlusswellenstrang und Zentrierung des Flanschmitnehmers
- 13b, 13.2.2: Mittel zur form- und/oder kraftschlüssigen Verbindung zur Realisierung der Drehmomentübertragung und Verbindung mit einem Anschlusswellenstrang und Zentrierung des Flanschmitnehmers
- 14a, 14b: Hirth-Stirn-Verzahnung
- 15.2: Schraubverbindung
- 16, 16.2: Wellenstrang
- 17, 17.2: zum Flanschmitnehmer ausgerichtete Stirnseite des Wellenstranges
- 18: Außenumfang
- 19: Kreisbogen
- 20.1a, 20.2a, 20.3a,: Außenkontur
- 20.1a, 20.2b, 20.3b:
- 21: Durchgangsöffnung
- 22: Durchgangsöffnung
- 23: Mittel zur Verspannung der beiden Gelenkgabelhälften
- 24.1a, 24.1 b: Durchgangsöffnungen an der ersten Gelenkgabelhälfte
- 24.2a, 24.2b: Durchgangsöffnungen an der zweiten Gelenkgabelhälfte
- 25a, 25b: Flankenlinien
- 26: Lagerbohrung
- 27.1 a, 27.1 b; 27.2a,: Segmente
- 27.2b, 27.3a, 27.3b:
- 28: Trennfuge
- 28.1a, 28.1b; 28.2a,: Segmente
- 28.2b; 28.3a, 28.3b:
- 29.1a, 28.2a: Verzahnungssegmente
- 30.1, 30.2: Verzahnungselemente
- Fu: Umfangskraft
- A1: Achse der Lagerbohrung
- Z1: Zapfenachse des in der Gelenkgabel gelagerten Zapfens
- G: Gelenkgabelachse
- E1: Ebene
- X1: Gerade
- F_{A}: Kraft
- F_{B}: Kraft
- r: Radius
- h: Höhe

## Patentansprüche

1. Flanschmitnehmer (1; 1.2) für ein Kardangelenk, insbesondere für den Einsatz in Gelenkwellen;
1.1 mit zwei Gelenkgabelhälften, einer ersten Gelenkgabelhälfte (4a; 4.2.1) und einer zweiten Gelenkgabelhälfte (4b; 4.2.2);
1.2 jede Gelenkgabelhälfte (4a, 4.2.1; 4.3; 4.4; 4b; 4.2.2) umfasst einen Fußteiles (5a; 5.2.1) und einen Lagerteil (6a, 6b; 6.2.1);
1.3 die Gelenkgabelhälften (4a; 4.2.1) sind im Bereich ihres Fußteiles (5a, 5.2.1) formschlüssig miteinander unter Bildung eines Flanschteiles (8, 8.2) aus den einzelnen Fußteilen (5a, 5.2.1) verbindbar;
1.4 die Fußteile (5a, 5.2.1) der Gelenkgabelhälften weisen an ihrer zum Fußteil (5a; 5.2.1) der jeweils anderen Gelenkgabelhälfte (4a; 4b) weisenden Koppelfläche (9a, 9.21) eine zueinander komplementäre Verzahnung (11.1a, 11.1b, 11.2.1a, 11.2.1 b) auf;
**gekennzeichnet durch** die folgenden Merkmale:
1.5 die an der einzelnen Koppelfläche ausgebildete Verzahnung (11 a, 11 b) umfasst wenigstens ein Verzahnungssegment, umfassend wenigstens ein Verzahnungselement (30.1 - 30.n) und ist derart ausgeführt, dass die Flankenlinie (25a, 25b) des einzelnen Verzahnungselementes (30.1 - 30n) sich, ausgehend von einer theoretischen an der Koppelfläche (9a, 9b) verlaufenden, geneigt zu einer Ebene, die von der Zapfenachse (Z1) des in der Gelenkgabel (4a, 4b) gelagerten Zapfens und der Gelenkachse (G) gebildet wird, ausgerichteten Gerade (X1) in einem Winkel zwischen 20° und 170° zu dieser erstreckt
oder ausgehend von einem theoretischen, an der Koppelfläche (9a, 9b) bildbaren Kreisbogen (19) von dessen Außenumfang (20) in Richtung der Außenkontur (20) des Fußteils entgegen der Stirnseite (12a, 12b), wobei die Verlängerungen mindestens einer Flankenlinie (25a, 25b) eines Verzahnungselementes (30.1a - 30.n) an der Koppelfläche (9a, 9.21) oder bei einer Bogenverzahnung - die Verlängerung der Sekante **durch** die Endpunkte der Flankenlinie - einen Winkel von größer als 20° bis kleiner als 170° mit einer Tangente an den Kreisbogen mit der Verzahnung bildet.

2. Flanschmitnehmer (1) nach Anspruch 1, **dadurch gekennzeichnet, dass** die Koppelfläche (9a, 9b) einer jeden Gelenkgabelhälfte (4a, 4b) durch eine Ebene beschreibbar ist.

3. Flanschmitnehmer (1) nach Anspruch 2, **dadurch gekennzeichnet, dass** die Ebene senkrecht zu einer Ebene ausgerichtet ist, die von der Gelenkgabelachse (G) und der Zapfenachse eines in der Gelenkgabel (6) gelagerten Zapfens gebildet wird.

4. Flanschmitnehmer (1; 1.2; 1.3; 1.4) nach Anspruch 1, **dadurch gekennzeichnet, dass** die Koppelhälfte (9a, 9b) einer jeden Gelenkgabelhälfte (4a, 4b; 4.2.1) durch mehrere Ebenen beschreibbar ist.

5. Flanschmitnehmer (1) nach Anspruch 1 bis 4, **dadurch gekennzeichnet, dass** sich das einzelne Verzahnungselement (30.1 - 30.n) ausgehend von einem theoretisch, an der Koppelfläche in Richtung zur Außenkontur des Fußteiles (5a, 5b) außerhalb der Stirnseite (12a, 12b) aufbringbaren Kreisbogen (19) erstreckt.

6. Flanschmitnehmer (1) nach Anspruch 5, **dadurch gekennzeichnet, dass** alle geometrischen Linien des einzelnen Verzahnungselementes (30.1 - 30.n) sich im Mittelpunkt (M) bzw. der durch diesen parallel zur Zapfenachse (Z1) verlaufenden Achse schneiden.

7. Flanschmitnehmer (1) nach Anspruch 4 bis 6, **dadurch gekennzeichnet, dass** sich das einzelne Verzahnungselement (30.1 - 30.n), ausgehend vom Außenumfang des theoretischen Kreisbogens (19) hinsichtlich der Höhe und Breite in Richtung von der Stirnseite (12a, 12b) weg vergrößert.

8. Flanschmitnehmer (1; 1.2) nach einem der Ansprüche 1 bis 7, **dadurch gekennzeichnet, dass** die Verzahnung (11.a, 11.b) als Hirth-Verzahnung ausgeführt ist.

9. Flanschmitnehmer (1, 1.2) nach einem der Ansprüche 5 bis 8, **dadurch gekennzeichnet, dass** die Verzahnung (11.a, 11.b) kreisbogenförmig in radialer Ausrichtung an der Koppelfläche (9a, 9b) angeordnet ist.

10. Flanschmitnehmer (1, 1.2) nach einem der Ansprüche 1 bis 9, **dadurch gekennzeichnet, dass** der theoretische Kreisbogen (19) durch einen mit der Gelenkachse (G) zusammenfallenden oder exzentrisch zu dieser angeordneten Mittelpunkt (M) bestimmt wird, der in Richtung parallel zur Gelenkachse (G) betrachtet in einem Bereich von 2/3 der Höhe der Koppelfläche (9a, 9b) in vertikaler Richtung, ausgehend von der Stirnfläche (12a, 12b) bis einschließlich einem Abstand von 2 h von der Stirnfläche (12a, 12b) in Richtung des Anschlusselementes angeordnet ist.

11. Flanschmitnehmer (1, 1.2) nach einem der Ansprüche 1 bis 10, **dadurch gekennzeichnet, dass** die Verzahnung (11a, 11 b) symmetrisch bezogen auf die Gelenkgabelachse (G) ausgebildet ist.

12. Flanschmitnehmer (1, 1.2) nach einem der Ansprüche 1 bis 11, **dadurch gekennzeichnet, dass** an der vom Lagerteil (6a, 6b; 6.2.1) wegweisenden Stirnseite (12, 12.2) des Flanschteiles (8, 8.2) Mittel (13a, 13b) zur Kopplung mit komplementären Mitteln an einem Anschlusselement zur Drehmomentenübertragung vom Flanschmitnehmer (1, 1.2) auf das Anschlusselement zur Vermeidung von Relativbewegungen in einer Ebene, die im Koppelbereich zwischen Flanschmitnehmer (1, 1.2) und Anschlusselement (16, 16.2) liegt und senkrecht zur Ebene (E1), welche von der Zapfenachse (Z1) des im Flanschmitnehmer (1, 1.2; 1.3; 1.4; 1.5) gelagerten Zapfens und der mit der Rotationsachse des Flanschmitnehmers zusammenfallenden Gelenkgabelachse (G) gebildet wird, ausgerichtet ist.

13. Flanschmitnehmer (1, 1.2) nach Anspruch 12, **dadurch gekennzeichnet, dass** die Mittel wenigstens eine segmentweise oder über den gesamten Umfang an der an der vom Lagerteil (6a, 6b; 6.2.1, 6.2.2; 6.3; 6.4) wegweisenden Stirnseite (12, 12.2; 12.5) des Flanschteiles (8; 8.2) ausgebildete axial ausgerichtete Hirth-Stirn-Verzahnung (14, 14.2; 14.5) umfassen.

## Claims

1. A flange yoke (1; 1.2) for a cardan universal joint, especially for the use in universal joint shafts;
1.1 comprising two halves of the yoke, a first half of the yoke (4a; 4.2.1) and a second half of the yoke (4b; 4.2.2);
1.2 each half of the yoke (4a, 4.2.1; 4.3; 4.4; 4b; 4.2.2) comprising a base part (5a; 5.2.1) and a bearing part (6a, 6b; 6.2.1);
1.3 the halves of the yoke (4a; 4.2.1) being connectable in the region of their base part (5a, 5.2.1) in an interlocking manner by forming a flange part (8, 8.2) from the individual base parts (5a, 5.2.1);
1.4 the base parts (5a, 5.2.1) of the halves of the yoke comprise a mutually complementary gearing (11.1 a, 11.1 b, 11.2.1a, 11.2.1b) on their coupling area (9a, 9.21) facing the respective other half of the yoke (4a; 4b); **characterized by** the following features:
1.5 the gearing (11 a, 11 b) formed on the individual coupling area comprises at least one gearing segment, comprising at least one gearing element (30.1 to 30.n) and being arranged in such a way that the tooth trace (25a, 25b) of the individual gearing element (30.1 to 30.n) extends at an angle between 20° and 170° to a theoretical straight line (X1) which extends on the coupling surface (9a, 9b) and is aligned inclined to a plane which is formed by the journal axis (Z1) of the journal held in the yoke (4a, 4b) and the joint axis (G) or, originating from a theoretical arc (19) of a circle which can be formed on the coupling surface (9a, 9b), from its outside circumference (20) in the direction of the outside shape (20) of the base part against the face side (12a, 12b), with the extensions of at least one tooth trace (25a, 25) of a gearing element (30.1 a to 30.n) on the coupling surface (9a, 9.21), or in the case of a spiral gearing, the extension of the secant through the end points of the tooth trace, forms an angle of larger than 20° up to smaller than 170° with a tangent on the arc of the circle with the gearing.

2. A flange yoke (1) according to claim 1, **characterized in that** the coupling surface (9a, 9b) of each half of the yoke (4a, 4b) can be described by a plane.

3. A flange yoke (1) according to claim 2, **characterized in that** the plane is aligned perpendicular to a plane which is formed by the yoke axis (G) and the journal axis of a journal held in the yoke (6).

4. A flange yoke (1; 1.2; 1.3; 1.4) according to claim 1, **characterized in that** the coupling half (9a, 9b) of each half of the yoke (4a, 4b; 4.2.1) can be described by several planes.

5. A flange yoke (1) according to claim 1 to 4, **characterized in that** the individual gearing element (30.1 to 30.n) extends originating from a theoretical arc (19) of a circle that can be applied to the coupling area in the direction towards the outside shape of the base part (5a, 5b) outside of the face side (12a, 12b).

6. A flange yoke (1) according to claim 5**, characterized in that** all geometric lines of the individual gearing element (30.1 to 30.n) intersect in the central point or the axis extending through the same parallel to the journal axis (Z1).

7. A flange yoke (1) according to claims 4 to 6, **characterized in that** the individual gearing element (30.1 to 30.n) increases with respect to height and width in the direction from the face side (12a, 12b), starting from the outside circumference.

8. A flange yoke (1; 1.2) according to one of the claims 1 to 7**, characterized in that** the gearing (11 a, 11 b) is arranged as a Hirth gearing.

9. A flange yoke (1, 1.2) according to one of the claims 5 to 8, **characterized in that** the gearing (11 a, 11 b) is arranged in the manner of an arc of a circle in radial alignment on the coupling area (9a, 9b).

10. A flange yoke (1, 1.2) according to one of the claims 1 to 9, **characterized in that** the theoretical arc of a circle (19) is determined by a central point which coincides with the joint axis (G) or is arranged eccentrically in relation to the same, which central point is arranged, when seen in the direction parallel to the joint axis (G), in a region of 2/3 of the height of the coupling area (9a, 9b) in the vertical direction, starting from the face surface (12a, 12b) up to and including a distance of 2 h from the face surface (12a, 12b) in the direction of the connecting element.

11. A flange yoke (1, 1.2) according to one of the claims 1 to 10, **characterized in that** the gearing (11 a, 11 b) is arranged symmetrically relating to the yoke axis (G).

12. A flange yoke (1, 1.2) according to one of the claims 1 to 11, **characterized in that** means (13a, 13b) are provided on the face side (12, 12.2) on the flange part (8, 8.2) facing away from the bearing part (6a, 6b; 6.2.1) for coupling with complementary means on a connecting element for the transmission of torque from the flange yoke (1, 1.2) to the connecting element for avoiding relative movements in a plane which is disposed in the coupling region between flange yoke (1,1.2) and connecting element (16, 16.2) and is aligned perpendicular to the plane (E1) which is formed by the journal axis (Z1) of the flange yoke (1, 1.2; 1.3; 1.4; 1.5) and the yoke axis (G) coinciding with the rotational axis of the flange yoke.

13. A flange yoke (1, 1.2) according to claim 12, **characterized in that** the means comprise at least one axially aligned Hirth spur gearing (14, 14.2; 14.5) arranged in segments or over the entire circumference on the face side (12, 12.2; 12.5) of the flange part (8; 8.2) facing away from the bearing part (6a, 6b; 6.2.1, 6.2.2; 6.3; 6.4).

## Revendications

1. Entraîneur à bride (1 ; 1.2) pour un joint à cardan, en particulier pour l'utilisation dans des arbres articulés ;
1.1 avec deux demi-fourchettes, une première demi-fourchette (4a ; 4.2.1) et une seconde demi-fourchette (4b ; 4.2.2) ;
1.2 chaque demi-fourchette (4a, 4.2.1 ; 4.3 ; 4.4 ; 4b ; 4.2.2) comporte une partie pied (5a ; 5.2.1) et une partie palier (6a, 6b, 6.2.1) ;
1.3 les demi-fourchettes (4a; 4.2.1) sont de forme congruente au niveau de leur partie pied (5a, 5.2.1) et peuvent être réunies pour former une partie bride (8, 8.2) à partir de leurs deux parties pieds (5a, 5.2.1) ;
1.4 chacune des parties pieds (5a, 5.2.1) des demi-fourchettes présente à sa surface de couplage (9a, 9.21) orientée vers la partie pied (5a ; 5.2.1) de l'autre demi-fourchette (4a ; 4b) un pas d'engrenage complémentaire à celui de l'autre (11.1a, 11.1b, 11.2.1a, 11.2.1b) ;
**caractérisé par** les traits suivants :
1.5 chaque pas d'engrenage formé à la surface de couplage (11 a, 11 b) comprend au moins un segment de pas d'engrenage comportant au moins un élément de pas d'engrenage (30.1 - 30.n) et celui-ci est réalisé de telle sorte que la ligne du flanc (25a, 25b) de chaque élément du pas d'engrenage (30.1 - 30n) s'étende, en partant d'une ligne théorique (X1), allant de la surface de couplage (9a, 9b), en direction oblique par rapport à un plan formé par l'axe (Z1) du pivot situé dans la fourchette (4a, 4b) et par l'axe de l'articulation (G), selon un angle compris entre 20° et 170° par rapport à ce plan
ou en partant d'un arc de cercle de cercle (19) théorétique pouvant être formé sur la surface de couplage (9a, 9b) ayant la circonférence extérieure de ladite surface (20) dans le sens du contour extérieur (20) de la partie pied en direction de la face terminale (12a, 12b), le prolongement d'au moins une ligne du flanc (25a, 25b) de l'un des éléments de pas d'engrenage (30.1a - 30.n) formant sur la surface de couplage (9a, 9.21) ou sur une denture spirale - le prolongement de la sécante passant par les extrémités de la ligne du flanc - un angle supérieur à 20° jusqu'à inférieur à 170° avec une tangente à l'arc de cercle au pas d'engrenage.

2. Entraîneur à bride (1) selon la revendication 1, **caractérisé en ce**ci que la surface de couplage (9a, 9b) de chacune des demi-fourchettes (4a, 4b) peut être décrite par un plan.

3. Entraîneur à bride (1) selon la revendication 2, **caractérisé en ce**ci que le plan est perpendiculaire à un plan formé par l'axe de la fourchette (G) et l'axe d'un pivot situé dans la fourchette (6).

4. Entraîneur à bride (1 ; 1.2 ; 1.3 ; 1.4) selon la revendication 1, **caractérisé en ce**ci que la moitié de couplage (9a, 9b) de chacune des demi-fourchettes (4a, 4b ; 4.2.1) peut être décrite par plusieurs plans.

5. Entraîneur à bride (1) selon les revendications 1 à 4, **caractérisé en ce**ci que chaque élément de pas d'engrenage (30.1 - 30.n) s'étend à partir d'un arc de cercle théorique (19) pouvant être tracé sur la surface de couplage en direction du contour extérieur de la partie pied (5a, 5b) en dehors de la face terminale (12a, 12b).

6. Entraîneur à bride (1) selon la revendication 5, **caractérisé en ce**ci que toutes les lignes géométriques de chacun des éléments de pas d'engrenage (30.1 - 30.n) se coupent au centre (M) resp. dans l'axe ayant un trajet parallèle à l'axe du pivot (Z1).

7. Entraîneur à bride (1) selon les revendications 4 à 6, **caractérisé en ce**ci que chaque élément de pas d'engrenage (30.1 - 30.n) s'agrandit en partant de la circonférence extérieure de l'arc de cercle théorique (19) en ce qui concerne la hauteur et la largeur en direction de la face terminale (12a, 12b).

8. Entraîneur à bride (1 ; 1.2) selon une des revendications 1 à 7, **caractérisé en ce**ci que le pas d'engrenage (11.a, 11.b) est réalisé comme denture Hirth.

9. Entraîneur à bride (1, 1.2) selon une des revendications 5 à 8, **caractérisé en ce**ci que le pas d'engrenage (11.a, 11.b) est disposé en forme d'arc de cercle en direction radiale sur la surface de couplage (9a, 9b).

10. Entraîneur à bride (1, 1.2) selon une des revendications 1 à 9, **caractérisé en ce**ci que l'arc de cercle théorique (19) est déterminé par un centre (M) coïncidant avec l'axe de l'articulation (G) ou disposé de manière excentrique par rapport à celui-ci, ledit centre étant disposé, si on le considère en direction parallèle à l'axe de l'articulation (G), dans un espace à 2/3 de hauteur de la surface de couplage (9a, 9b) en direction verticale, en partant de la face terminale (12a, 12b) jusqu'à un distance de 2 h de la face terminale comprise (12a, 12b) en direction de l'élément de jonction.

11. Entraîneur à bride (1, 1.2) selon une des revendications 1 à 10, **caractérisé en ce**ci que le pas d'engrenage (11a, 11b) est constitué de manière symétrique par rapport à l'axe de la fourchette (G).

12. Entraîneur à bride (1, 1.2) selon une des revendications 1 à 11, **caractérisé en ce**ci que, sur la face terminale (12, 12.2) en direction inverse de la partie palier (6a, 6b ; 6.2.1) de la partie bride (8, 8.2), des moyens (13a, 13b) pour l'accouplement avec des moyens complémentaires sur un élément de jonction servant à la transmission de couples de torsion de l'entraîneur à bride (1, 1.2) sur l'élément de jonction pour éviter les mouvements relatifs sont constitués dans un plan, qui se situe dans la zone d'accouplement entre l'entraîneur à bride (1, 1.2) et l'élément de jonction (16,16.2), et perpendiculaires à l'axe perpendiculaire (E1), qui est formé par l'axe du pivot (Z1) situé dans l'entraîneur à bride (1, 1.2 ; 1.3 ; 1.4 ; 1.5) et par l'axe de la fourchette (G) coïncidant à l'axe de rotation de l'entraîneur à bride.

13. Entraîneur à bride (1, 1.2) selon la revendication 12, **caractérisé en ce**ci que les moyens comportent au moins une denture Hirth constituée en direction axiale (14, 14.2 ; 14.5), formée de manière segmentaire ou sur l'ensemble de l'étendue sur la face terminale (12, 12.2 ; 12.5) en direction inverse de la partie palier (6a, 6b ; 6.2.1, 6.2.2 ; 6.3 ; 6.4) de la partie bride (8 ; 8.2).
